# EUROPÄISCHE PATENTANMELDUNG

(11) **EP 4 495 893 A1**
(43) Veröffentlichungstag der Anmeldung: **22.01.2025**
(21) Anmeldenummer: 24186945.2
(22) Anmeldetag: 07.07.2024
(51) Int. Cl.: G06V 10/764, G06V 10/82, G06V 20/69, G06V 10/774

(54) **VERFAHREN ZUM TRAINIEREN EINES DATENVERARBEITUNGSNETZES, VERFAHREN ZUR ERKENNUNG VON OBJEKTEN IN LICHTMIKROSKOPISCHEN DATEN, RECHENEINHEITEN, LICHTMIKROSKOP UND COMPUTERPROGRAMME**

(30) Priorität: 18.07.2023 DE 102023118997
(71) Anmelder: Abberior Instruments GmbH, 37077 Göttingen (DE)
(72) Erfinder: HEINE, Jörn, 37213 Witzenhausen (DE); REUSS, Matthias, 37083 Göttingen (DE)

(57) **Zusammenfassung**

Die Erfindung betrifft ein Verfahren zum Trainieren eines Datenverarbeitungsnetzes (20) auf die Erkennung von Objekten (13) in lichtmikroskopischen Daten, wobei lichtmikroskopische Trainingsdaten (14) zur Verfügung gestellt werden, wobei die Trainingsdaten (14) eine Mehrzahl an Datensätzen (15,16) umfassen, die mit unterschiedlichen Werten eines Aufnahmeparameters aufgenommen wurden, wobei ein Datensatz der Trainingsdaten (14), der eine Repräsentation eines von dem Datenverarbeitungsnetz (20) zu erkennenden Objekts (13) enthält, als Leitdatensatz (15) ausgewählt wird, und wobei mindestens ein weiterer Datensatz der Trainingsdaten (14) auf Basis des Leitdatensatzes (15) automatisch annotiert wird, und wobei das Datenverarbeitungsnetz (20) zumindest mittels des mindestens einen annotierten Datensatzes (16) auf die Erkennung des Objekts (13) trainiert wird, sowie ein Verfahren zur Erkennung von Objekten (13), Recheneinheiten (6), ein Lichtmikroskop (1) und Computerprogramme.

## Beschreibung

### Technisches Gebiet der Erfindung

Die Erfindung betrifft ein Verfahren zum Trainieren eines Datenverarbeitungsnetzes, ein Verfahren zur Erkennung von Objekten in lichtmikroskopischen Daten mittels des trainierten Datenverarbeitungsnetzes, sowie Recheneinheiten, ein Lichtmikroskop und Computerprogramme zur Durchführung der Verfahren.

### Stand der Technik

Aus dem Stand der Technik sind verschiedene Künstliche-Intelligenz-Verfahren bekannt, mit denen es unter Anderem möglich ist, Eingangsdaten oder Eingangssignale automatisch zu klassifizieren.

Für die Objekterkennung, wie z.B. die Klassifizierung von Bilddaten, eignen sich besonders gut sogenannte Deep-Learning-Verfahren. Deep-Learning-Verfahren gehören zu den sogenannten Representation-Learning-Verfahren, d.h., sie sind in der Lage, aus annotierten Rohdaten zu lernen. Zusätzlich zeichnen sich Deep-Learning-Verfahren dadurch aus, dass Repräsentationen der Daten in verschiedenen Schichten gebildet werden.

Einen Überblick über Deep-Learning-Verfahren, insbesondere neuronale Netzwerke, gibt beispielsweise die Veröffentlichung "Deep Learning" von Y. LeCan, Y. Bengio und G. Hinton, Nature 521 (2015), 436-444.

Künstliche Neuronale Netze (*artificial neural networks,* ANN) sind Datenverarbeitungsnetze, welche insbesondere Strukturen im tierischen und menschlichen Gehirn schematisch nachbilden können. Sie bestehen aus Verarbeitungsknoten, die in einer Eingangsschicht (*input layer*), einer Ausgangsschicht (*output layer*) und typischerweise einer Vielzahl zwischen der Eingangsschicht und der Ausgangsschicht angeordneter versteckter Schichten (*hidden layers*) organisiert sind. Jeder Knoten erhält Eingangsdaten, verarbeitet diese mit einer nichtlinearen Funktion und gibt Ausgangsdaten an nachfolgende Knoten aus. Die Knoten der Eingangsschicht erhalten dabei Eingangsdaten (Trainingsdaten oder Testdaten). Die Knoten der versteckten Schichten und der Ausgangsschicht erhalten typischerweise die Ausgangsdaten von mehreren Knoten der jeweils in Datenflussrichtung vorhergehenden Schicht. Dabei sind für alle Verbindungen zwischen Knoten (zumindest implizit) Gewichte definiert, d.h. relative Anteile, mit denen die Eingangsdaten bei der Verarbeitung mit der nichtlinearen Funktion berücksichtigt werden. Ein Netzwerk kann auf eine bestimmte Aufgabe, z.B. die Segmentierung oder Klassifizierung von Bilddaten, trainiert werden, indem Trainingsdaten von dem Netzwerk verarbeitet werden, auf das Ergebnis eine Fehlerfunktion angewendet wird, deren Wert die Übereinstimmung des ermittelten Ergebnisses mit dem korrekten Ergebnis widerspiegelt, und auf Basis der Fehlerfunktion die Gewichte zwischen den Knoten angepasst werden. Dazu kann z.B. mit einer sogenannten Rückpropagation für jedes Gewicht ein Gradient der Fehlerfunktion ermittelt werden, und die Gewichte können auf Basis des steilsten Verlaufs des Gradienten angepasst werden.

Neuronale Faltungsnetze (*convolutional neural networks,* CNN) sind eine Untergruppe der neuronalen Netze, die sogenannte Faltungsschichten enthalten, denen typischerweise Pooling-Schichten nachgeordnet sind. Bei Faltungsschichten kann die Datenübertragung zwischen zwei Schichten durch eine Faltungsmatrix (auch *kernel* oder *filter bank* genannt) repräsentiert werden, d.h. jeder Eingangsknoten erhält als Eingangsdaten das innere Produkt zwischen den Ausgangsdaten eines Teils der Knoten der vorherigen Schicht mit der Faltungsmatrix. Beim sogenannten Pooling werden die Ausgangsdaten einer Schicht in eine Schicht mit einer geringeren Anzahl von Knoten übertragen, wobei jeweils die Ausgangsdaten mehrerer Knoten miteinander verrechnet werden.

Solche neuronalen Faltungsnetze sind insbesondere in der Bildverarbeitung vorteilhaft, da durch die Faltungsschichten die Erkennung lokaler Strukturen und die Verschiebungsinvarianz stark verbessert werden.

Im Bereich der Bildbearbeitung von mikroskopischen Daten wurden Künstliche-Intelligenz-Verfahren, insbesondere künstliche neuronale Netze, bereits für eine Vielzahl von Aufgaben eingesetzt, beispielsweise für die Segmentierung von Bilddaten (siehe z.B. "Best Practices in Deep-Learning-Based Segmentation of Microscopy Images" von T. Scherr, A. Bartschat, M. Reischl, J. Stegmaier und R. Mikut (Proc. 28 Workshop Computational Intelligence, Dortmund, 29.-30.11.2018, 175-195).

In der oben angegebenen Publikation von Scherr et al. wird insbesondere ein Verfahren angedeutet, bei dem lichtmikroskopische 3D-Daten scheibchenweise verwendet werden, um ein Datenverarbeitungsnetz auf die 2D-Segmentierung von Bilddaten zu trainieren.

Die Patentveröffentlichungsschrift US 2021/0089749 A1 beschreibt ein Datenverarbeitungsnetz zum spektralen Entmischen von mikroskopischen Bilddaten, das unter anderem z-Stapel von mikroskopischen Aufnahmen und sogenannte Multi-Track-Aufnahmen als Eingangsdaten verarbeiten kann, wobei als Multi-Track-Aufnahmen Serien von Bildern mit unterschiedlichen Einstellungen des Mikroskops bezeichnet werden. Das System kann auch mit simulierten Multi-Track-Aufnahmen auf die Trennung der Farbkanäle trainiert werden.

Als Augmentation wird im Bereich der künstlichen Intelligenz ein Verfahren bezeichnet, bei dem Trainingsdaten für ein Datenverarbeitungsnetz durch Nachbearbeitung vervielfacht und verändert werden. Beispielsweise ist es aus dem Bereich der Bilderkennung durch künstliche Intelligenz bekannt, Trainingsbilder für ein Datenverarbeitungsnetz morphologisch zu verändern, z.B. zu verzerren, stauchen, drehen oder translatieren, und die Bildhelligkeit durch Nachbearbeitung anzupassen, um augmentierte Trainingsdaten zu erhalten. Dies hat den Vorteil, dass mehr Trainingsdaten erhalten werden, und dass das Datenverarbeitungsnetz besser auf die Erkennung von Objekten trainiert wird, die in den Eingangsbildern in diversen Posen und unter diversen Aufnahmebedingungen abgebildet sind.

Die Vervielfältigung von Trainingsdaten ist auch im Bereich der Objekterkennung aus lichtmikroskopischen Aufnahmen von großer Bedeutung, insbesondere da hier Trainingsdaten sehr aufwändig zu erzeugen und annotieren sind und häufig nicht in so großer Anzahl verfügbar sind wie beispielsweise bei fotografischen Aufnahmen.

Eine Vervielfältigung durch Augmentation, also durch Bildbearbeitung, hat jedoch insbesondere den Nachteil, dass die auf diese Weise erzeugten zusätzlichen Trainingsdaten artifiziell sind und die Verhältnisse in echten lichtmikroskopischen Aufnahmen nur unzureichend widerspiegeln, so dass Qualität der trainierten Datenverarbeitungsnetze suboptimal ist.

Insbesondere besteht ein wesentlicher Unterschied zwischen klassischen fotografischen Bilddaten und lichtmikroskopischen Bilddaten darin, dass bei der Lichtmikroskopie eine Veränderung von Aufnahmeparametern eine Wirkung auf die zu untersuchende Probe haben kann. Beispielsweise kann bei einer Erhöhung der Intensität des Anregungslichts oder Verhinderungslichts (z.B. bei der STED-Mikroskopie) vermehrt ein Fotobleichen von Fluorophoren auftreten. Somit wirkt sich eine Veränderung von Aufnahmeparametern oftmals in nicht-linearer Weise auf die Bilddaten aus. Eine solche Variation der Bilddaten kann durch klassische Augmentationsverfahren nur unzureichend simuliert werden.

### Aufgabe der Erfindung

Hieraus ergibt sich die Aufgabe, ein Verfahren zum Trainieren eines Datenverarbeitungsnetzes auf die Erkennung von Objekten in lichtmikroskopischen Daten in benutzerfreundlicher Weise zu verbessern.

### Lösung

Diese Aufgabe wird durch das Verfahren zum Trainieren eines Datenverarbeitungsnetzes nach Anspruch 1, das Verfahren zur Erkennung von Objekten in lichtmikroskopischen Daten nach Anspruch 10, die Recheneinheiten nach Anspruch 11 und 12, das Lichtmikroskop nach Anspruch 13 und die Computerprogramme nach Anspruch 14 und 15 gelöst. Vorteilhafte Weiterbildungen sind in den Unteransprüchen 2 bis 9 angegeben und werden im Folgenden beschrieben.

### Beschreibung der Erfindung

Ein erster Aspekt der Erfindung betrifft ein Verfahren zum Trainieren eines Datenverarbeitungsnetzes auf die Erkennung von Objekten in lichtmikroskopischen Daten, wobei lichtmikroskopische Trainingsdaten zur Verfügung gestellt werden, wobei die Trainingsdaten eine Mehrzahl an Datensätzen umfassen, die mit unterschiedlichen Werten eines Aufnahmeparameters aufgenommen wurden.

Erfindungsgemäß wird mindestens ein Datensatz der Trainingsdaten, der eine Repräsentation eines von dem Datenverarbeitungsnetz zu erkennenden Objekts enthält, als Leitdatensatz ausgewählt, wobei mindestens ein weiterer Datensatz der Trainingsdaten auf Basis des Leitdatensatzes automatisch annotiert wird, und wobei das Datenverarbeitungsnetz zumindest mittels des mindestens einen annotierten Datensatzes, insbesondere auch mittels des Leitdatensatzes, auf die Erkennung des Objekts trainiert wird.

Durch die unterschiedlichen Werte des Aufnahmeparameters werden für dieselbe Probe mit denselben Objekten zusätzliche Trainingsdaten generiert, wobei die Objekte insbesondere in den unterschiedlichen Datensätzen in verschiedenen Posen dargestellt sein können, d.h. das betreffende Objekt ist z.B. auf verschiedene Arten oder in verschiedenen Ansichten abgebildet oder es sind jeweils unterschiedliche Teilstrukturen des Objekts sichtbar. Durch das Training des Datenverarbeitungsnetzes mit derartigen Trainingsdaten wird die Objekterkennung entscheidend verbessert, da das Datenverarbeitungsnetz lernt, Objekte in verschiedensten Posen zu identifizieren. Dadurch dass mindestens einer der Datensätze als Leitdatensatz ausgewählt wird, auf Basis dessen weitere Datensätze automatisch annotiert werden, kann die Erzeugung der von dem Datenverarbeitungsnetz nutzbaren Trainingsdaten insbesondere auf besonders schnelle und effektive Weise durchgeführt werden, was die Benutzerfreundlichkeit des Verfahrens verbessert.

Der Begriff "lichtmikroskopische Daten" umfasst im Zusammenhang der vorliegenden Spezifikation insbesondere Bilddaten und Lokalisationsdaten. Im Gegensatz zu Bilddaten, die durch eine optische Abbildung eines Teils der Probe, insbesondere durch Weitfeldmikroskopie oder Scanning-Mikroskopie, zustande kommen, umfassen Lokalisationsdaten geschätzte Positionen einzelner Emitter (z.B. Fluorophore, Quantum Dots, reflektierende Nanopartikel o.ä.) in der Probe. Solche Lokalisationsdaten können in Form einer Lokalisationskarte der Positionen mehrerer in verschiedenen Lokalisationsschritten lokalisierter Emitter dargestellt werden, die einem klassischen mikroskopischen Bild gleicht. Bekannte lokalisationsmikroskopische Verfahren sind z.B. PALM/STORM und verwandte Methoden sowie MINFLUX. Bei den lichtmikroskopischen Daten kann es sich auch um Bilddaten oder Lokalisationsdaten einer Serie von Bildern handeln, z.B. einer sogenannten *time-Iapse*-Aufnahme oder eines axialen Stapels von Bildern (sog. *z-*s*tack*)*.* Die lichtmikroskopischen Daten können in einem oder mehreren Kanälen in geeigneten Dateiformaten, z.B. als Grauwerte oder Farbwerte, kodiert sein.

Der Begriff "Erkennen von Objekten" bzw. "Objekterkennung" beschreibt automatische rechnerbasierte Methoden zum Identifizieren von Strukturen in Bilddaten und umfasst sämtliche computerbasierte Methoden, bei denen (zumindest implizit) Objekte erkannt werden, unter anderem auch das "Klassifizieren" von Objekten, also das Einordnen eines Objekts in eine Kategorie von Objekten, sowie die Segmentierung (z.B. die semantische Segmentierung und die Instanz-Segmentierung) von Bilddaten.

Ein Datenverarbeitungsnetz ist eine Datenstruktur, mittels derer ein Verfahren der künstlichen Intelligenz durchgeführt werden kann, beispielsweise ein künstliches neuronales Netz oder eine *support vector machine.*

Die Trainingsdaten bestehen aus mehreren Datensätzen, die z.B. lichtmikroskopische Bilder, lichtmikroskopische Lokalisationskarten einzelner Emitter (z.B. Fluorophore oder mit Fluorophoren markierte Moleküle, fluoreszente Nanopartikel oder lichtstreuende bzw. reflektierende Nanopartikel) oder Trajektorien sich in der Probe bewegender Emitter sein können.

Die Datensätze der Trainingsdaten, z.B. die Bilder, wurden mit unterschiedlichen Werten eines Aufnahmeparameters aufgenommen.

Der Begriff "Aufnahmeparameter" umfasst nicht nur verschiedene Parameter der abbildenden Mikroskopie (z.B. Fokusposition, Wellenlänge von Beleuchtungslicht, Lichtintensität von Beleuchtungs-, insbesondere Anregungslicht, Form einer Lichtverteilung des Beleuchtungslichts, Belichtungszeit eines Detektors, Scangeschwindigkeit, *pixel dwell time* oder ähnliches) sondern z.B. auch Parameter einer lokalisationsmikroskopischen Technik wie z.B. MINFLUX oder PALM/STORM (z.B. verwendetes Beleuchtungsmuster bzw. Beleuchtungssequenz, verwendeter Positionsschätzer, Frame-Rate der Kamera, Blinkrate von Emittern in der Probe). Aufnahmeparameter können auch Parameter der Probe sein, z.B. eine Zusammensetzung des Puffers oder Einbettungsmediums, die sich auf emittierende Zustände und Dunkelzustände von Emittern in der Probe auswirkt und somit insbesondere eine Wirkung auf die Blinkstatistik der Emitter hat.

Ein "Annotieren" eines Trainingsdatensatzes bedeutet eine Kennzeichnung des Datensatzes auf eine solche Weise, dass sich das Datenverarbeitungsnetz mit dem gekennzeichneten Trainingsdatensatz auf die Erkennung eines Objekts trainieren lässt. Dazu kann z.B. jedem Bildpixel eines Bildes ein Parameter zugeordnet werden, der angibt, dass das Bildpixel zu einem bestimmten Objekt oder einer bestimmten Objektkategorie gehört.

Gemäß einer Ausführungsform umfasst das Verfahren das Aufnehmen der Trainingsdaten mittels eines Lichtmikroskops. Insbesondere kann dabei der Aufnahmeparameter während der lichtmikroskopischen Aufnahme automatisch angepasst werden. Der Benutzer kann also z.B. im Live-Modus eine Zelle auswählen, von der dann automatisch ein z-Stapel von Bildern oder eine Serie von Bildern mit unterschiedlicher Gesamtintensität eines Beleuchtungslichts als Trainingsdaten für das Datenverarbeitungsnetz aufgenommen wird.

Gemäß einer weiteren Ausführungsform umfasst das Verfahren das Erzeugen weiterer Datensätze auf Basis der lichtmikroskopisch aufgenommenen Trainingsdatensätze, insbesondere durch Interpolation der lichtmikroskopisch aufgenommenen Trainingsdatensätze. Dabei kann z.B. zwischen benachbarten Bildern eines z-Stapels interpoliert werden, um weitere Zwischenbilder synthetisch zu erzeugen. Dies hat den Vorteil, dass zusätzlich auf einfache Weise die Menge der Trainingsdaten erhöht werden kann, um die Objekterkennung weiter zu verbessern.

Gemäß einer Ausführungsform wird die Repräsentation des Objekts in dem Leitdatensatz auf Basis einer Benutzerinteraktion identifiziert, wobei der Leitdatensatz auf Basis des identifizierten Objekts gekennzeichnet wird. Dabei kann der Benutzer z.B. bestimmte Bereiche in einem Bild markieren, die zu einem Objekt gehören. Auf diese Weise kann der Benutzer seine Erfahrung bei der Objekterkennung einbringen, und somit die automatische Objekterkennung durch das Datenverarbeitungsnetz entscheidend verbessern. Da der Benutzer nur den Leitdatensatz manuell annotiert, während die Annotation der weiteren Datensätze der Trainingsdaten erfindungsgemäß automatisch auf Basis des annotierten Leitdatensatzes durchgeführt wird, kann der Benutzer dennoch in sehr kurzer Zeit eine große Menge qualitativ hochwertiger Trainingsdaten generieren.

Gemäß einer Ausführungsform wird die Repräsentation des Objekts in dem Leitdatensatz automatisch identifiziert, wobei der Leitdatensatz auf Basis des identifizierten Objekts gekennzeichnet wird. Dabei kann z.B. eine automatische Objekterkennung des Leitdatensatzes mittels eines Tresholding-Verfahrens oder mittels künstlicher Intelligenz (d.h. insbesondere mit einem weiteren trainierten Datenverarbeitungsnetz) durchgeführt werden, wobei die Annotierung auf Basis der Ergebnisse der Objekterkennung erfolgt. Nachfolgend kann die Annotierung der weiteren Datensätze auf Basis des annotierten Leitdatensatzes z.B. mit einem rechentechnisch weniger aufwändigen Verfahren (z.B. einem Interpolationsverfahren) durchgeführt werden, was die Erzeugung der fertigen Trainingsdaten insgesamt beschleunigt und somit benutzerfreundlicher macht.

Gemäß einer weiteren Ausführungsform wird der weitere Datensatz der Trainingsdaten annotiert, indem Bereichen, insbesondere Bildbereichen, des weiteren Datensatzes Identifikatoren für Objekte oder Objektklassen zugeordnet werden, insbesondere wobei die Bereiche, insbesondere die Bildbereiche, pixelweise definiert sind. Weiter insbesondere können die Datensätze in der Form ([Bildpixel], Objektklasse) annotiert werden.

Gemäß einer weiteren Ausführungsform ist das Datenverarbeitungsnetz für ein Deep-Learning-Verfahren eingerichtet.

Im Zusammenhang der vorliegenden Spezifikation bezeichnet der Begriff "Deep-Learning-Verfahren" ein Künstliche-Intelligenz-Verfahren, das Rohdaten (im Gegensatz zu maßgeschneiderten Merkmalsvektoren bei anderen Kl-Methoden) als Eingangsdaten verwendet, wobei Repräsentationen der Eingangsdaten in verschiedenen Schichten gebildet werden.

Gemäß einer weiteren Ausführungsform ist das Datenverarbeitungsnetz ein künstliches neuronales Netz.

Im Zusammenhang der vorliegenden Spezifikation bezeichnet der Begriff "künstliches neuronales Netz" ein Datenverarbeitungsnetz umfassend eine Mehrzahl an Knoten, die in einer Eingangsschicht, mindestens einer versteckten Schicht und einer Ausgangsschicht organisiert sind, wobei jeder Knoten Eingangsdaten mittels einer nichtlinearen Funktion in Ausgangsdaten umwandelt, und wobei zwischen der Eingangsschicht und einer versteckten Schicht, zwischen einer versteckten Schicht und der Ausgangsschicht sowie optional (für den Fall, dass mehrere versteckte Schichten vorgesehen sind) zwischen verschiedenen versteckten Schichten (zumindest implizit) Gewichte definiert sind, wobei die Gewichte Anteile angeben, mit denen die Ausgangsdaten eines jeweiligen Knotens als Eingangsdaten eines dem jeweiligen Knoten in einer Datenflussrichtung nachgelagerten Knoten berücksichtigt werden. Die Gewichte können insbesondere auch durch Faltungsmatrizen definiert sein.

Unter die Definition "neuronales Netz" gemäß dieser Spezifikation fallen nicht nur sogenannte neuronale Faltungsnetze (engl. *convolutional neural networks,* die sich durch eine Faltungsoperation zwischen Faltungsschichten sowie durch Pooling-Schichten auszeichnen, die die Eingangsdaten in weniger Knoten zusammenfassen als die jeweils in Datenflussrichtung vorgelagerte Schicht), sondern insbesondere auch sog. *fully connected networks* oder *multilayer perceptrons* mit ausschließlich vollverbundenen Schichten, insbesondere gleicher Dimension.

Ein trainiertes neuronales Netz ist ein neuronales Netz, das durch Prozessierung von Trainingsdaten auf eine bestimmte Aufgabe angepasste Gewichte aufweist.

Gemäß einer weiteren Ausführungsform ist das Objekt eine biologische Einheit, insbesondere eine biologische Zelle, insbesondere wobei das Datenverarbeitungsnetz auf eine Zuordnung des Objekts zu einer Objektklasse trainiert wird, weiter insbesondere wobei die Objektklasse einem Typ von biologischen Zellen oder einem Phänotyp von biologischen Zellen desselben Typs entspricht.

Der Begriff "Phänotyp" ist im Kontext der vorliegenden Spezifikation allgemein als Merkmalsausprägung einer Zelle zu verstehen. Darin sind sowohl durch genetische Veränderungen ausgelöste Merkmalsausprägungen als auch beispielsweise durch Umwelteinflüsse oder Wirkstoffe bedingte Merkmalsausprägungen enthalten.

Gemäß einer weiteren Ausführungsform sind die Datensätze der Trainingsdaten anhand des Aufnahmeparameters geordnet. Dies erleichtert die automatische Annotation der weiteren Datensätze auf Basis des Leitdatensatzes (beispielsweise durch Interpolation oder in iterativer Weise Datensatz für Datensatz), da benachbarte Datensätze in der nach den Werten des Aufnahmeparameters geordneten Menge der Datensätze insbesondere besonders geringe Unterschiede hinsichtlich der Darstellung der zu erkennenden Objekte haben.

Gemäß einer weiteren Ausführungsform repräsentieren die Datensätze der Trainingsdaten aufgrund der unterschiedlichen Werte des Aufnahmeparameters das Objekt in unterschiedlicher Weise. D.h., die Objekte können z.B. in den Datensätzen unterschiedliche Posen haben oder es können unterschiedliche Teilstrukturen der Objekte sichtbar sein. Dies verbessert die Qualität der Objekterkennung mittels des trainierten Datenverarbeitungsnetzes, da z.B. in diesem Fall Objekte in mehr verschiedenen Posen oder Ansichten erkannt werden. Das Datenverarbeitungsnetz wird also variabler hinsichtlich der konkreten Lage/Pose/Ansicht eines zu erkennenden Objekts.

Gemäß einer weiteren Ausführungsform weicht eine Lage des zu erkennenden Objekts in den Datensätzen der Trainingsdaten aufgrund der unterschiedlichen Werte des Aufnahmeparameters voneinander ab. Dies kann z.B. bei einem dreidimensionalen Objekt der Fall sein, das bei verschiedenen Fokuspositionen zweidimensional abgebildet wird (etwa bei einem sogenannten z-Stapel). In diesem Fall ermöglicht das erfindungsgemäße Verfahren, ein trainiertes Datenverarbeitungsnetz zur Verfügung zu stellen, das solche Objekte auch in einzelnen zweidimensionalen Aufnahmen verschiedener Fokusposition erkennen kann.

Alternativ dazu ist die Lage des zu erkennenden Objekts in den Datensätzen der Trainingsdaten gemäß einer weiteren Ausführungsform unabhängig von dem Wert des Aufnahmeparameters.

Gemäß einer weiteren Ausführungsform ist der Aufnahmeparameter eine Belichtungszeit, eine Pixelgröße oder eine Pixelverweilzeit.

Gemäß einer weiteren Ausführungsform ist der Aufnahmeparameter eine Beleuchtungslichtintensität, insbesondere eine Anregungslichtintensität und/oder eine Verhinderungslichtintensität.

Der Begriff Anregungslicht bezeichnet dabei Licht, das Emitter in einer zu untersuchenden Probe in einen Zustand versetzt, in dem die Emitter Licht aussenden. Dies kann insbesondere reflektiertes Licht, gestreutes Licht oder Lumineszenzlicht, weiter insbesondere Fluoreszenzlicht, sein.

Der Begriff Verhinderungslicht bezeichnet Licht, das Emitter aus einem durch Anregungslicht angeregten Zustand in einen nicht-angeregten Zustand oder in einen Dunkelzustand überführt. Dabei kann es sich z.B. um STED (*stimulated emission depletion*)- Licht oder Schaltlicht handeln. Bei der STED-Mikroskopie wird das Verhinderungslicht moduliert und überlagert mit Anregungslicht in die Probe fokussiert, so dass eine Intensitätsverteilung von STED-Licht mit einem zentralen Intensitätsminimum, insbesondere einer Intensitätsnullstelle, gebildet wird, wobei das Minimum mit dem Maximum des Anregungsfokus zur Deckung gebracht wird. Das Anregungslicht regt dabei die Emitter zur Fluoreszenz an. Durch die STED-Intensitätsverteilung, die z.B. ein sogenannter Donut oder *bottle beam* sein kann, werden außerhalb des geometrischen Fokus Emitter aus dem angeregten Zustand durch das STED-Licht in den Grundzustand versetzt, können also trotz Anregung durch das Anregungslicht nicht fluoreszieren. Dadurch wird die Ortsauflösung bis auf Werte unterhalb der optischen Beugungsgrenze verbessert.

Wenn die lichtmikroskopischen Daten, in denen mit dem Datenverarbeitungsnetz Objekte erkannt werden sollen, mittels STED-Mikroskopie oder einer verwandten Technik aufgenommen wurden und der in den Datensätzen (hier Bildern) der Trainingsdaten variierte Aufnahmeparameter die Gesamtintensität des Verhinderungslichts ist, haben die einzelnen Datensätze der Trainingsdaten unterschiedliche Ortsauflösungen. Auf diese Weise lässt sich das Datenverarbeitungsnetz vorteilhafterweise auf die Erkennung bestimmter Objekte in Aufnahmen unterschiedlicher Ortsauflösung trainieren.

Gemäß einer weiteren Ausführungsform ist der Aufnahmeparameter eine Position einer Fokusebene in einer axialen Richtung parallel zu einer optischen Achse eines Objektivs eines Lichtmikroskops, mit dem die Trainingsdaten aufgenommen wurden, wobei die Trainingsdaten ein axialer Stapel von Bildern (sogenannter z-Stack) sind. Dies hat den Vorteil, dass das Datenverarbeitungsnetz mit dem erfindungsgemäßen Verfahren auf benutzerfreundliche Weise darauf trainiert wird, bestimmte Objekte in zweidimensionalen Darstellungen zu erkennen, die verschiedenen Schnitten durch das Objekt entsprechen. Die Datensätze sind in diesem Fall zweidimensionale Bilder des Objekts, die sich durch die Fokusposition voneinander unterscheiden. Die Verschiebung der Fokusebene kann auf verschiedene Weise erfolgen, z.B. durch Bewegen des Objektivs relativ zur Probe (durch Verschieben des Objektivs oder z.B. des Probenhalters entlang der optischen Achse).

Gemäß einer weiteren Ausführungsform umfasst das Annotieren der weiteren Datensätze ein Zuordnen korrespondierender Bereiche in den Datensätzen des Stapels zu einem Objekt.

Gemäß einer weiteren Ausführungsform weisen benachbarte Bilder des axialen Stapels einen axialen Abstand auf, der höchstens der halben axialen Auflösung eines bei der Aufnahme der Trainingsdaten verwendeten Objektivs entspricht. Auf diese Weise erhält das Datenverarbeitungsnetzwerk Trainingsdaten, welche bei einer gegebenen Auflösung die maximale Information über die Variation der Abbildung entlang der optischen Achse enthält. Dies verbessert die Qualität der Objekterkennung durch das Datenverarbeitungsnetz. Der axiale Abstand kann in speziellen Ausführungsformen z.B. zwischen 200 nm und 300 nm, insbesondere bei ca. 250 nm, liegen.

Gemäß einer weiteren Ausführungsform wird aus den Bildern des axialen Stapels ein 3D-Modell des Objekts oder einer das Objekt aufweisenden Probe erstellt, wobei das Datenverarbeitungsnetz mittels des 3D-Modells trainiert wird. Auf diese Weise kann das Datenverarbeitungsnetz auf benutzerfreundliche Weise auf die Erkennung von Objekten in 3D-Bilddaten trainiert werden.

Gemäß einer weiteren Ausführungsform werden aus den Bildern des axialen Stapels mittels eines Modells prozessierte Bilder bestimmt, wobei die prozessierten Bilder einer Abbildung der Probe mit einer niedrigeren Ortsauflösung als der ursprünglichen Ortsauflösung der Bilder des axialen Stapels entsprechen. Hierdurch werden durch Augmentierung zusätzliche Trainingsdaten erzeugt, mit denen das Datenverarbeitungsnetz z.B. lernen kann, wie eine entsprechende Probe mit einem anderen Objektiv niedrigerer numerischer Apertur abgebildet werden würde. Dies hat den Vorteil, dass Trainingsdaten nur mit einem Objektiv aufgenommen werden müssen, was die Benutzerfreundlichkeit des Verfahrens verbessert.

Gemäß einer weiteren Ausführungsform werden aus den Trainingsdaten, insbesondere aus dem axialen Stapel, ein erster Leitdatensatz und ein zweiter Leitdatensatz ausgewählt, wobei der erste Leitdatensatz und der zweite Leitdatensatz unterschiedliche Abbildungen desselben Objekts aufweisen, wobei vermutete Positionen von weiteren Abbildungen des Objekts in mindestens einem weiteren Datensatz der Trainingsdaten, dessen Werte des Aufnahmeparameters, insbesondere dessen axiale Positionen, zwischen dem Wert des Aufnahmeparameters, insbesondere der axialen Position, des ersten Leitdatensatzes und dem Wert des Aufnahmeparameters, insbesondere der axialen Position, des zweiten Leitdatensatzes liegen, auf Basis von Stützstellen in dem ersten Leitdatensatz und dem zweiten Leitdatensatz geschätzt werden, wobei der mindestens eine weitere Datensatz auf Basis der geschätzten vermuteten Positionen automatisch annotiert wird. Die Verwendung zweier Leitdatensätze erlaubt eine einfache Annotation der dazwischenliegenden Datensätze durch Schätzung. Auf diese Weise können auf besonders schnelle und daher benutzerfreundliche Weise große Mengen hochwertiger Trainingsdaten erstellt werden. Der erste Leitdatensatz und der zweite Leitdatensatz können insbesondere manuell (durch Benutzerinteraktion) oder automatisch (z.B. durch Thresholding oder KI-Objekterkennung) annotiert werden.

Das Schätzen der vermuteten Positionen auf Basis der Stützstellen kann insbesondere durch eine Interpolation der Positionen des Objekts erfolgen.

Der Begriff "Interpolation" umfasst im Kontext der vorliegenden Spezifikation lineare und nichtlineare Interpolationsverfahren (z.B. auch Spline-Interpolationsverfahren).

Gemäß einer weiteren Ausführungsform ist der Aufnahmeparameter eine Zeit, wobei die Trainingsdaten eine Zeitreihe von lichtmikroskopischen Aufnahmen sind. Eine solche Zeitreihe kann z.B. aus einer sogenannten Time-Lapse-Aufnahme stammen und z.B. als Video dargestellt werden. In diesem Fall kann das Datenverarbeitungsnetz z.B. auf die Erkennung von zeitlichen Änderungen der zu erkennenden Objekte in der Probe trainiert werden. Ein solches Datenverarbeitungsnetz lässt sich z.B. vorteilhaft in der Bildgebung lebender biologischer Zellen (*Live Cell Imaging*) einsetzen.

Gemäß einer weiteren Ausführungsform umfassen die Trainingsdaten erste Daten, die mit unterschiedlichen Werten eines ersten Aufnahmeparameters aufgenommen wurden und zweite Daten, die mit unterschiedlichen Werten eines zweiten Aufnahmeparameters aufgenommen wurden.

Gemäß einer weiteren Ausführungsform wird ein Datensatz der ersten Daten oder ein Datensatz der zweiten Daten, der eine Repräsentation des von dem Datenverarbeitungsnetz zu erkennenden Objekts enthält, als Leitdatensatz ausgewählt, wobei mindestens ein weiterer Datensatz der ersten Daten und mindestens ein weiterer Datensatz der zweiten Daten auf Basis desselben Leitdatensatzes annotiert werden. Dies hat den Vorteil, dass auf einfache Weise mehr Daten automatisch annotiert werden können. Beispielsweise kann in den Datensätzen der ersten Daten die Lage des zu erkennenden Objekts aufgrund der unterschiedlichen Werte des ersten Aufnahmeparameters voneinander abweichen, während in den Datensätzen der zweiten Daten die Lage des zu erkennenden Objekts unabhängig von dem Wert des zweiten Aufnahmeparameters ist oder umgekehrt. Bei dem ersten Aufnahmeparameter kann es sich z.B. um eine Position der Fokusebene in der axialen Richtung handeln, während es sich bei dem zweiten Aufnahmeparameter z.B. um eine Beleuchtungslichtintensität, insbesondere eine Anregungslichtintensität oder eine Verhinderungslichtintensität handeln kann oder umgekehrt.

Gemäß einer weiteren Ausführungsform wird ein Datensatz der ersten Daten als erster Leitdatensatz ausgewählt und ein Datensatz der zweiten Daten wird als zweiter Leitdatensatz ausgewählt, wobei mindestens ein weiterer Datensatz der ersten Daten auf Basis des ersten Leitdatensatzes annotiert wird, und wobei mindestens ein weiterer Datensatz der zweiten Daten auf Basis des zweiten Leitdatensatzes annotiert wird. Dies kann zu einer genaueren Annotierung führen, da spezifische Leitdatensätze verwendet werden.

Ein zweiter Aspekt der Erfindung betrifft ein Verfahren zur Erkennung von Objekten in lichtmikroskopischen Daten, wobei zur Erkennung der Objekte ein mit dem Verfahren gemäß dem ersten Aspekt trainiertes Datenverarbeitungsnetz verwendet wird. Die Objekterkennung erfolgt dabei durch künstliche Intelligenz.

Ein dritter Aspekt der Erfindung betrifft eine Recheneinheit, die dazu ausgebildet ist, ein Datenverarbeitungsnetz gemäß dem Verfahren nach dem ersten Aspekt zu trainieren.

Ein vierter Aspekt der Erfindung betrifft eine Recheneinheit, die dazu ausgebildet ist, das Verfahren nach dem zweiten Aspekt durchzuführen.

Ein fünfter Aspekt der Erfindung betrifft ein Lichtmikroskop aufweisend eine Recheneinheit nach dem dritten Aspekt und/oder eine Recheneinheit nach dem vierten Aspekt.

Das Lichtmikroskop kann insbesondere zumindest eine Beleuchtungslichtquelle, insbesondere einen Anregungslaser, zum Beleuchten einer Probe mit Beleuchtungslicht, insbesondere Anregungslicht, ein Objektiv sowie einen Detektor zum Erfassen von Licht aus der Probe aufweisen.

Wenn das Lichtmikroskop z.B. ein konfokales Laserscanning-Mikroskop oder ein STED-Mikroskop ist, fokussiert das Objektiv das Beleuchtungslicht in die Probe, der Detektor (typischerweise ein Punktdetektor, z.B. ein Photomultiplier oder eine avalanche-Fotodiode) ist konfokal angeordnet, steht also in einer Bildebene bezüglich der Fokusebene (typischerweise hinter einer konfokalen Lochblende), und das Lichtmikroskop weist einen Scanner (z.B. einen Galvanometerscanner) auf, der dazu ausgebildet ist, den Fokus des Beleuchtungslichts durch die Probe zu scannen.

Bei einem STED-Mikroskop ist weiterhin eine STED-Lichtquelle, insbesondere ein STED-Laser, zur Erzeugung von STED-Licht vorgesehen, wobei das STED-Licht insbesondere von einem Phasenfilter oder einem steuerbaren Wellenfrontmodulator (z.B. einem *spatial light modulator,* SLM) in seiner Phase moduliert wird, so dass am Fokus z.B. ein STED-Donut oder ein STED*bottle-beam* gebildet wird.

Alternativ kann es sich bei dem Lichtmikroskop natürlich auch um ein Weitfeldmikroskop handeln, bei dem die Probe durch das Objektiv homogen beleuchtet wird und typischerweise das aus der Probe emittierte Licht auf einen ortsauflösenden Detektor (z.B. eine Kamera) abgebildet wird.

Mit dem Lichtmikroskop können die erfindungsgemäß für das Training des Datenverarbeitungsnetz verwendeten Trainingsdaten aufgenommen werden, wobei ein Aufnahmeparameter variiert wird. Zusätzlich oder alternativ können mit dem Lichtmikroskop Testdaten für das trainierte Datenverarbeitungsnetz generiert werden, in denen dann mit dem Datenverarbeitungsnetz Objekte erkannt werden.

Gemäß einer Ausführungsform weist das Lichtmikroskop einen Aktuator auf, der mit dem Objektiv oder einem Probenhalter zum Halten der Probe mechanisch gekoppelt ist, wobei das Lichtmikroskop eine Steuereinheit aufweist, die dazu ausgebildet ist, den Aktuator so zu steuern, dass eine Position einer Fokusebene in der Probe in einer axialen Richtung parallel zu einer optischen Achse des Objektivs verschoben wird. Mithilfe eines solchen Mikroskops lassen sich sogenannte z-Stapel (2D-Bilder aus verschiedenen Fokusebenen) aufnehmen, die als Trainingsdaten für das Datenverarbeitungsnetz verwendet werden können.

Gemäß einer weiteren Ausführungsform weist das Lichtmikroskop eine Verhinderungs-Lichtquelle zur Erzeugung von Verhinderungslicht (insbesondere STED-Licht) und eine Steuereinheit auf, wobei die Steuereinheit dazu ausgebildet ist, die Gesamtintensität des Verhinderungslichts einzustellen. Die Steuerung kann z.B. direkt durch Ansteuerung eines STED-Lasers oder über einen Attenuator, wie z.B. einen akustooptischen Modulator (AOM), erfolgen. Mit einem solchen Lichtmikroskop können insbesondere Trainingsdatensätze (STEDmikroskopische Bilder) erzeugt werden, bei denen die STED-Intensität variiert und die somit eine unterschiedliche Ortsauflösung aufweisen.

Bei dem Lichtmikroskop kann es sich z.B. auch um ein Lokalisationsmikroskop handeln, das die Position einzelner Emitter in einer Probe ermittelt, wobei dann aus den Einzellokalisationen z.B. eine Lokalisationskarte der Probe nach Art eines lichtmikroskopischen Bildes oder eine Trajektorie eines sich in der Probe bewegenden Emitters berechnet werden kann. Ein solches Mikroskop kann z.B. zur Durchführung eines MINFLUX- oder MINSTED-Lokalisationsverfahrens oder eines PALM/STORM-Lokalisationsverfahrens eingerichtet sein.

Ein sechster Aspekt der Erfindung betrifft ein Computerprogramm aufweisend Befehle, die bewirken, dass eine Recheneinheit, insbesondere die Recheneinheit nach dem dritten Aspekt, das Verfahren nach dem ersten Aspekt ausführt.

Ein siebenter Aspekt der Erfindung betrifft ein Computerprogramm aufweisend Befehle, die bewirken, dass eine Recheneinheit, insbesondere die Recheneinheit nach dem vierten Aspekt, das Verfahren nach dem zweiten Aspekt ausführt.

Weitere Ausführungsformen der Recheneinheiten nach dem dritten und vierten Aspekt, des Lichtmikroskops nach dem fünften Aspekt und der Computerprogramme nach dem sechsten und siebenten Aspekt ergeben sich aus den weiter oben dargestellten Ausführungsformen der Verfahren nach dem ersten und zweiten Aspekt.

Vorteilhafte Weiterbildungen der Erfindung ergeben sich aus den Patentansprüchen, der Beschreibung und den Zeichnungen und den zugehörigen Erläuterungen zu den Zeichnungen. Die beschriebenen Vorteile von Merkmalen und / oder Merkmalskombinationen der Erfindung sind lediglich beispielhaft und können alternativ oder kumulativ zur Wirkung kommen.

Hinsichtlich des Offenbarungsgehalts (aber nicht des Schutzbereichs) der ursprünglichen Anmeldungsunterlagen und des Patents gilt Folgendes: Weitere Merkmale sind den Zeichnungen - insbesondere den dargestellten relativen Anordnungen und Wirkverbindungen - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

Im Folgenden werden Ausführungsbeispiele der Erfindung anhand der Figuren beschrieben. Diese beschränken nicht den Gegenstand dieser Offenbarung und den Schutzumfang.

### Kurzbeschreibung der Figuren

- Fig. 1: zeigt schematisch erfindungsgemäße Trainingsdaten gemäß einem Ausführungsbeispiel;
- Fig. 2: zeigt schematisch ein Datenverarbeitungsnetz;
- Fig. 3: zeigt eine schematische Darstellung eines Ausführungsbeispiels des erfindungsgemäßen Lichtmikroskops;
- Fig. 4: zeigt eine schematische Darstellung eines Ausführungsbeispiels einer Recheneinheit zur Durchführung der erfindungsgemäßen Verfahren.

### Beschreibung der Figuren

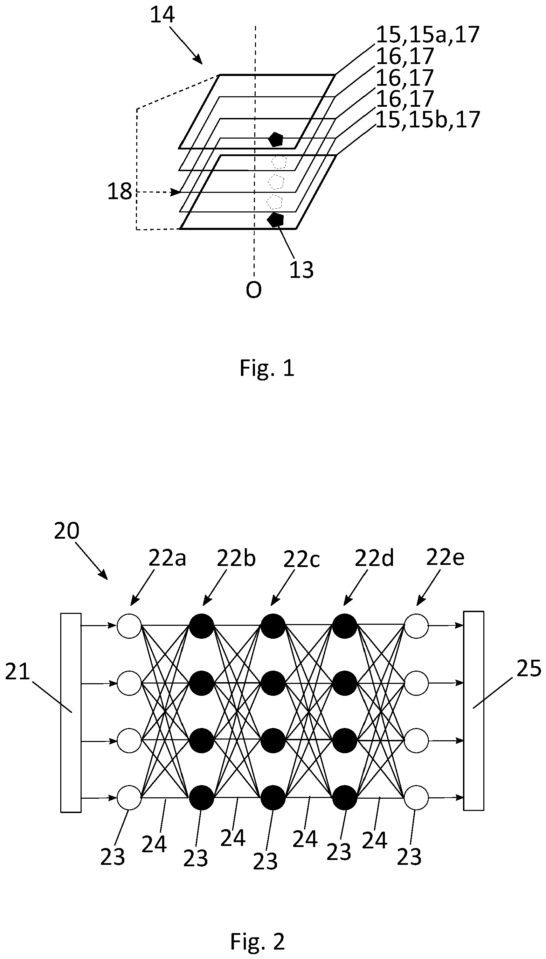

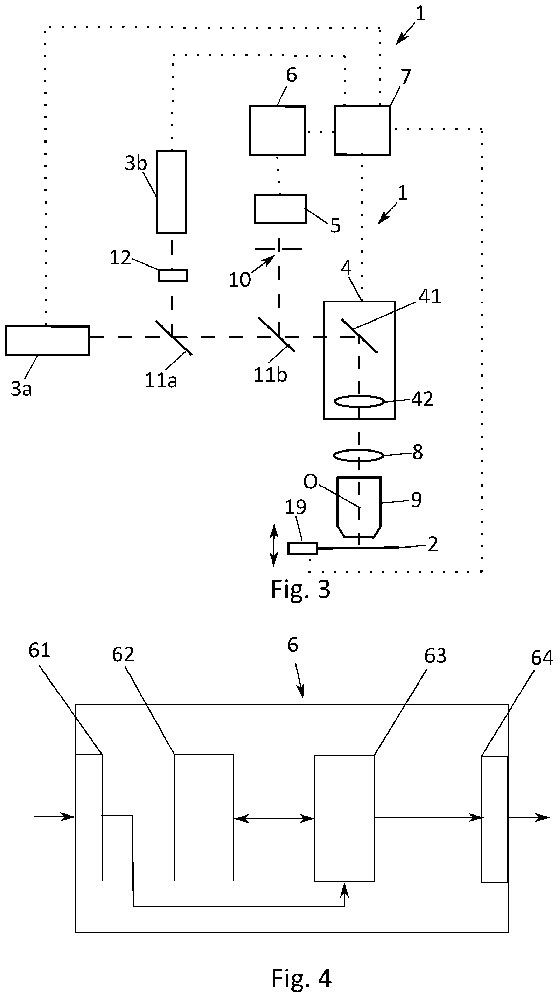

Fig. 1 zeigt eine schematische Darstellung von Trainingsdaten 14 für das erfindungsgemäße Datenverarbeitungsnetz 20, z.B. ein künstliches neuronales Netz. Die Trainingsdaten 14 bestehen gemäß dem dargestellten Beispiel aus Datensätzen 15,16, die jeweils ein lichtmikroskopisches Bild 17 einer Probe 2 repräsentieren. Die Bilder 17 sind hier zweidimensionale Bilder, die in unterschiedlichen zu einer optischen Achse O des Objektivs 9 (siehe Fig. 3) senkrechten Fokusebenen aufgenommen wurden und daher einen sogenannten z-Stapel bilden. Weiterhin ist ein in den Bildern 17 abgebildetes Objekt 13, z.B. eine biologische Zelle, schematisch dargestellt, wobei in den unterschiedlichen Fokusebenen leicht unterschiedliche Ansichten des Objekts 13 abgebildet wurden. Die zwei äußeren Bilder 17 des Stapels werden nun gemäß dem erfindungsgemäßen Verfahren als erster Leitdatensatz 15a und zweiter Leitdatensatz 15b definiert. In diesen Leitdatensätzen 15a,15b wird das Objekt 13 automatisch (z.B. mittels eines weiteren Datenverarbeitungsnetzes, z.B. eines neuronalen Netzes zur Objekterkennung) oder manuell mittels Benutzerinteraktion annotiert, d.h. die Position des Objekts 13 (insbesondere die entsprechenden Pixelwerte) werden in den Leitdatensätzen 15a,15b oder in weiteren Daten gekennzeichnet. Für die weiteren Datensätze 16, deren axiale Position zwischen den axialen Positionen des ersten Leitdatensatzes 15a und des zweiten Leitdatensatzes 15b liegt, wird auf Basis der Leitdatensätze 15a, 15b ein automatisches Annotieren 18 durchgeführt, d.h. die Position des Objekts 13 in diesen weiteren Datensätzen 16 wird auf Basis der Kennzeichnung in den Leitdatensätzen 15a,15b, und insbesondere aufgrund von Vorwissen über die zugeordneten axialen Positionen, die Position des Objekts 13 gekennzeichnet, so dass das Datenverarbeitungsnetz 20 aus den annotierten Trainingsdaten 14 die Erkennung gleichartiger Objekte 13 lernen kann. Für das Annotieren 18 kann z.B. ein Interpolationsalgorithmus verwendet werden.

In Fig. 2 ist schematisch ein beispielhaftes Datenverarbeitungsnetz 20, insbesondere ein künstliches neuronales Netz, dargestellt, das mit dem erfindungsgemäßen Verfahren trainiert werden kann. Das Datenverarbeitungsnetz 20 besteht aus Knoten 23, die in einer Eingangsschicht 22a, drei versteckten Schichten 22b,22c,22d sowie einer Ausgangsschicht 22e organisiert sind, und mittels Verbindungen 24 verbunden sind.

Die Eingangsschicht 22a erhält als Eingangsdaten 21 lichtmikroskopische Daten. Jeder Knoten 23 wendet auf die Eingangsdaten 21 eine nichtlineare Funktion an, wobei das Ergebnis der Rechenoperation gemäß dem dargestellten Beispiel an die Knoten 23 der in Datenflussrichtung nachgelagerten ersten versteckten Schicht 22b weitergegeben wird. Die Knoten dieser Schicht 22b wenden wiederum eine nichtlineare Funktion auf diese weitergegebenen Daten an und leiten die Ergebnisse an die Knoten 23 der zweiten versteckten Schicht 22c weiter. Nach weiteren Rechenoperationen durch die dritte versteckte Schicht 22d und die Ausgangsschicht 22e geben die Knoten 23 der Ausgangsschicht 22e Ausgangsdaten 25 aus, z.B. eine binäre Maske, welche eine Segmentierung der lichtmikroskopischen Daten repräsentiert.

Auch wenn zur besseren Übersicht in Fig. 2 nur drei versteckte Schichten 22b,22c,22d dargestellt sind, enthalten echte Datenverarbeitungsnetze 20 üblicherweise deutlich mehr versteckte Schichten 22b,22c,22d, beispielsweise hunderte bis tausende.

Für jede der Verbindungen 24 zwischen den Knoten 23 benachbarter Schichten 22a,22b,22c,22d,22e sind insbesondere Gewichte definiert, welche den Anteil der Ausgabe eines Knotens 23 an der Eingabe des in Datenflussrichtung nachgelagerten Knotens 23 angibt.

Ein solches Datenverarbeitungsnetz 20 kann z.B. auf die Erkennung von Objekten 13 in Bilddaten trainiert werden, indem Trainingsdaten 14 von dem Datenverarbeitungsnetz 20 verarbeitet werden. Diese Bilddaten können mit dem Datenverarbeitungsnetz 20 verarbeitet werden, wobei auf das Ergebnis eine Fehlerfunktion angewendet wird, deren Wert die Übereinstimmung des ermittelten Ergebnisses mit dem korrekten Ergebnis widerspiegelt, d.h. hier liefert die Fehlerfunktion beispielsweise einen hohen Wert, wenn das Datenverarbeitungsnetz 20 ein Objekt 13 falsch zuordnet. Auf Basis der Ergebnisse der Fehlerfunktion werden dann die Gewichte an den Verbindungen 24 zwischen den Knoten 23 angepasst, z.B. mit einer sogenannten Rückpropagation, wobei für jedes Gewicht ein Gradient der Fehlerfunktion ermittelt wird, und die Gewichte auf Basis des steilsten Verlaufs des Gradienten angepasst werden.

Fig. 3 zeigt ein Ausführungsbeispiel eines erfindungsgemäßen Lichtmikroskops 1 mit einer erfindungsgemäßen Recheneinheit 6.

Das Lichtmikroskop 1 weist eine erste Lichtquelle 3a zur Erzeugung eines Anregungslichtstrahls und eine zweite Lichtquelle 3b zur Erzeugung eines Verhinderungslichtstrahls, insbesondere eines STED-Lichtstrahls, auf. Das Verhinderungslicht durchläuft einen Lichtmodulator 12, der die Phase und/oder die Amplitude des Verhinderungslichts moduliert, um an einem gemeinsamen Fokus des Anregungslichts und des Verhinderungslichts in einer Probe 2 eine Lichtverteilung des Verhinderungslichts mit einem lokalen Intensitätsminimum zu erzeugen. Auf diese Weise kann nach dem Prinzip der STED-Mikroskopie die Auflösung verbessert werden. Das Anregungslicht und das Verhinderungslicht werden an einem ersten Strahlteiler 11a in einen gemeinsamen Strahlengang eingekoppelt. Das kombinierte Anregungslicht und Verhinderungslicht durchläuft einen zweiten Strahlteiler 11b, der von der Probe 2 emittiertes Licht, insbesondere Fluoreszenzlicht, über eine konfokale Lochblende 10 zu einem Detektor 5 ablenkt, und anschließend einen Scanner 4 mit einem Scanspiegel 41 und einer Scanlinse 42, wobei der Scanner 4 den kombinierten Lichtstrahl lateral verlagert und somit über die Probe scannt. In Fig. 3 ist zur besseren Übersicht nur ein Scanspiegel 41 gezeigt, obwohl xy-Strahlscanner insbesondere mindestens zwei Spiegel aufweisen. Anschließend gelangt der kombinierte Lichtstrahl über eine Tubuslinse 8 zu einem Objektiv 9, das den Lichtstrahl in die Probe 2 fokussiert, um Emitter in einem Bereich, der kleinere Abmessungen als die Beugungsgrenze hat, anzuregen.

Ein Probenhalter, auf dem die Probe 2 angeordnet ist, ist mit einem Aktuator 19 mechanisch gekoppelt, der dazu ausgebildet ist, die Probe 2 in einer axialen Richtung parallel zu der optischen Achse O des Objektivs 9 relativ zu dem Objektiv 9 zu verschieben, so dass unterschiedliche Fokusebenen in der Probe 2 von dem Lichtmikroskop 1 abgebildet werden können.

Das von angeregten Emittern in der Probe 2 ausgesendete Fluoreszenzlicht wird von dem Objektiv 9 gesammelt, von dem Scanner 4 entscannt, von dem zweiten Strahlteiler 11b reflektiert und von dem konfokalen Detektor 5 erfasst. Die Signale des Detektors 5 werden von der Recheneinheit 6 ausgewertet, wobei von der Recheneinheit 6 auf Basis der für verschiedene Scanpunkte gemessenen Lichtintensitäten ein Bild erstellt werden kann. Das Lichtmikroskop 1 verfügt weiterhin über eine mit dem Detektor 5, dem Scanner 4, der ersten Lichtquelle 3a und der zweiten Lichtquelle 3b und dem Aktuator 19 verbundene Steuereinheit 7.

Die Recheneinheit 6 ist schematisch in Fig. 4 dargestellt. Sie weist einen Dateneingang 61, einen Prozessor 62, eine Speichereinheit 63 und einen Datenausgang 64 auf. In der Speichereinheit 63 können Informationen gespeichert sein, die ein Künstliche-Intelligenz-Verfahren implementieren, indem der Prozessor 62 entsprechende Rechenoperationen ausführt. Dabei kann z.B. ein untrainiertes oder trainiertes künstliches neuronales Netz mit entsprechenden Gewichten für die Verbindungen 24 zwischen Knoten 23 (siehe Fig. 2) in der Speichereinheit 63 gespeichert sein. Über den Dateneingang 61 kann die Recheneinheit 6 lichtmikroskopische Daten als Testdaten erhalten, die dann von dem Prozessor 62 gemäß dem gespeicherten trainierten künstlichen neuronalen Netz in Ausgabedaten umgerechnet werden, diese können über den Datenausgang 64 ausgegeben und z.B. von einer Anzeigeeinheit (nicht dargestellt) angezeigt werden, etwa als binäre Maske, welche die in den lichtmikroskopischen Daten erkannten Objekte 13 repräsentiert. Alternativ oder zusätzlich dazu können die Ausgabedaten in der Speichereinheit 63 oder einer separaten Speichereinheit gespeichert werden. Vorab kann das Datenverarbeitungsnetz 20 durch an dem Dateneingang 61 eingespeiste Trainingsdaten 14 erfindungsgemäß trainiert werden.

Die in Fig. 4 dargestellten Komponenten können auf Hardware- oder Softwareebene implementiert sein. Weiterhin können der Dateneingang 61 und der Datenausgang 64 optional in einer bidirektionalen Datenschnittstelle kombiniert sein.

Die Recheneinheit kann z.B. ein Computer (insbesondere ein Mehrzweckrechner, eine grafische Prozessoreinheit, ein FPGA, *field programmable gate array,* oder ein ASICS, *application specific integrated circuit*), eine elektronische Kontrolleinheit oder ein eingebettetes System sein. Die Speichereinheit 63 speichert Befehle, die bei einer Ausführung durch den Prozessor 62 bewirken, dass das erfindungsgemäße Verfahren ausgeführt wird. Die gespeicherten Befehle bilden daher ein durch den Prozessor 62 ausführbares Programm.

### Bezugszeichenliste

- 1: Lichtmikroskop
- 2: Probe
- 3a: Erste Lichtquelle
- 3b: Zweite Lichtquelle
- 4: Scanner
- 5: Detektor
- 6: Recheneinheit
- 7: Steuereinheit
- 8: Tubuslinse
- 9: Objektiv
- 10: Lochblende
- 11a: Erster Strahlteiler
- 11b: Zweiter Strahlteiler
- 12: Lichtmodulator
- 13: Objekt
- 14: Trainingsdaten
- 15: Leitdatensatz
- 15a: Erster Leitdatensatz
- 15b: Zweiter Leitdatensatz
- 16: Weiterer Datensatz
- 17: Bild
- 18: Annotieren
- 19: Aktuator
- 20: Datenverarbeitungsnetz
- 21: Eingangsdaten
- 22a: Eingangsschicht
- 22b,22c,22d: Versteckte Schicht
- 22e: Ausgangsschicht
- 23: Knoten
- 24: Verbindung
- 25: Ausgangsdaten
- 41: Scanspiegel
- 42: Scanlinse
- 61: Dateneingang
- 62: Prozessor
- 63: Speichereinheit
- 64: Datenausgang
- O: Optische Achse

## Patentansprüche

1. Verfahren zum Trainieren eines Datenverarbeitungsnetzes (20), insbesondere eines künstlichen neuronalen Netzes, auf die Erkennung von Objekten (13) in lichtmikroskopischen Daten, wobei lichtmikroskopische Trainingsdaten (14) zur Verfügung gestellt werden, wobei die Trainingsdaten (14) eine Mehrzahl an Datensätzen (15,16) umfassen, die mit unterschiedlichen Werten eines Aufnahmeparameters aufgenommen wurden,
**dadurch gekennzeichnet, dass**
ein Datensatz der Trainingsdaten (14), der eine Repräsentation eines von dem Datenverarbeitungsnetz (20) zu erkennenden Objekts (13) enthält, als Leitdatensatz (15) ausgewählt wird, wobei mindestens ein weiterer Datensatz der Trainingsdaten (14) auf Basis des Leitdatensatzes (15) automatisch annotiert wird, und wobei das Datenverarbeitungsnetz (20) zumindest mittels des mindestens einen annotierten Datensatzes (16), insbesondere auch mittels des Leitdatensatzes (15), auf die Erkennung des Objekts (13) trainiert wird.

2. Verfahren nach Anspruch 1, **dadurch gekennzeichnet, dass** die Datensätze (15,16) der Trainingsdaten (14) anhand des Aufnahmeparameters geordnet sind.

3. Verfahren nach Anspruch 1 oder 2, **dadurch gekennzeichnet, dass** die Datensätze (15,16) der Trainingsdaten (14) aufgrund der unterschiedlichen Werte des Aufnahmeparameters das Objekt (13) in unterschiedlicher Weise repräsentieren.

4. Verfahren nach einem der vorhergehenden Ansprüche, **dadurch gekennzeichnet, dass** eine Lage des zu erkennenden Objekts (13) in den Datensätzen (15,16) der Trainingsdaten aufgrund der unterschiedlichen Werte des Aufnahmeparameters voneinander abweicht.

5. Verfahren nach einem der Ansprüche 1 bis 4, **dadurch gekennzeichnet, dass** der Aufnahmeparameter eine Beleuchtungslichtintensität, insbesondere eine Anregungslichtintensität und/oder eine Verhinderungslichtintensität, ist.

6. Verfahren nach einem der Ansprüche 1 bis 4, **dadurch gekennzeichnet, dass** der Aufnahmeparameter eine Position einer Fokusebene in einer axialen Richtung parallel zu einer optischen Achse (O) eines Objektivs (9) eines Lichtmikroskops (1) ist, mit dem die Trainingsdaten (14) aufgenommen wurden, wobei die Trainingsdaten (14) ein axialer Stapel von Bildern (17) sind.

7. Verfahren nach Anspruch 6, **dadurch gekennzeichnet, dass** benachbarte Bilder (17) des axialen Stapels einen axialen Abstand aufweisen, der höchstens der halben axialen Auflösung eines bei der Aufnahme der Trainingsdaten (14) verwendeten Objektivs (9) entspricht.

8. Verfahren nach einem der vorhergehenden Ansprüche, **dadurch gekennzeichnet, dass** aus den Trainingsdaten (14) ein erster Leitdatensatz (15a) und ein zweiter Leitdatensatz (15b) ausgewählt werden, wobei der erste Leitdatensatz (15a) und der zweite Leitdatensatz (15b) unterschiedliche Abbildungen desselben Objekts (13) aufweisen, wobei vermutete Positionen von weiteren Abbildungen des Objekts (13) in mindestens einem weiteren Datensatz (16) der Trainingsdaten (14), dessen Werte des Aufnahmeparameters zwischen dem Wert des Aufnahmeparameters des ersten Leitdatensatzes (15a) und dem Wert des Aufnahmeparameters des zweiten Leitdatensatzes (15b) liegen, auf Basis von Stützstellen in dem ersten Leitdatensatz (15a) und dem zweiten Leitdatensatz (15b) geschätzt werden, wobei das mindestens eine weitere Datensatz (16) auf Basis der geschätzten vermuteten Positionen automatisch annotiert wird.

9. Verfahren nach einem der vorhergehenden Ansprüche, **dadurch gekennzeichnet, dass** die Trainingsdaten (14) erste Daten, die mit unterschiedlichen Werten eines ersten Aufnahmeparameters aufgenommen wurden und zweite Daten, die mit unterschiedlichen Werten eines zweiten Aufnahmeparameters aufgenommen wurden, umfassen, insbesondere wobei ein Datensatz der ersten Daten oder ein Datensatz der zweiten Daten, der eine Repräsentation des von dem Datenverarbeitungsnetz (20) zu erkennenden Objekts (13) enthält, als Leitdatensatz (15) ausgewählt wird, wobei mindestens ein weiterer Datensatz (16) der ersten Daten und mindestens ein weiterer Datensatz (16) der zweiten Daten auf Basis des Leitdatensatzes (15) annotiert werden.

10. Verfahren zur Erkennung von Objekten in lichtmikroskopischen Daten, **dadurch gekennzeichnet, dass** zur Erkennung der Objekte ein mit dem Verfahren gemäß einem der Ansprüche 1 bis 9 trainiertes Datenverarbeitungsnetz (20) verwendet wird.

11. Recheneinheit (6), die dazu ausgebildet ist, ein Datenverarbeitungsnetz (20) gemäß dem Verfahren nach einem der Ansprüche 1 bis 9 zu trainieren.

12. Recheneinheit (6), die dazu ausgebildet ist, das Verfahren nach Anspruch 10 durchzuführen.

13. Lichtmikroskop (1) aufweisend eine Recheneinheit (6) nach Anspruch 11 oder 12.

14. Computerprogramm aufweisend Befehle, die bewirken, dass eine Recheneinheit (6) das Verfahren nach einem der Ansprüche 1 bis 9 ausführt.

15. Computerprogramm aufweisend Befehle, die bewirken, dass eine Recheneinheit (6) das Verfahren nach Anspruch 10 ausführt.
